# EUROPEAN PATENT SPECIFICATION

(11) **EP 1 595 659 B1**
(45) Date of publication and mention of the grant of the patent: **16.03.2011**
(21) Application number: 03782866.2
(22) Date of filing: 22.12.2003
(51) Int. Cl.: B25J 19/06, B25J 9/22

(54) **ENABLING UNIT OF TEACHING PENDANT**
AKTIVIERUNGSEINHEIT EINES HANDPROGRAMMIERGERÄTS
UNITE DE DECLENCHEMENT DE PENDANT D'APPRENTISSAGE

(30) Priority: 27.12.2002 JP 2002380746
(43) Date of publication of application: 16.11.2005
(73) Proprietor: IDEC IZUMI CORPORATION, Osaka-shi, Osaka 532-8550 (JP)
(72) Inventor: NOBUHIRO, Masaki c/o IDEC IZUMI CORPORATION, Osaka-shi, Osaka 532-8550 (JP); FUKUI, Takao c/o IDEC IZUMI CORPORATION, Osaka-shi, Osaka 532-8550 (JP)
(74) Representative: Müller - Hoffmann & Partner
(86) International application number: PCT/JP2003/016433
(87) International publication number: WO 2004/060618

(56) References cited:
- JP-A- 11 077 579
- JP-A- 2002 083 522
- JP-A- 2002 083 522
- JP-A- 2002 334 625

## Description

### Technical Field

The present invention relates to a teaching pendant for use in setting the particulars of an action to be performed by an apparatus to be taught such as an industrial robot and, more particularly, to a teaching pendant enabling device configured to choose whether or not to enable a teaching signal based on an operation on a deadman switch.

### Background Art

A transportable teaching pendant is operated to teach actions to a mechanical apparatus such as an industrial robot in initialization and adjustment of the mechanical apparatus and a like occasion. During teaching, the operator has to operate the teaching pendant held by his or her both hands at a location near a movable part of the mechanical apparatus and hence is exposed to such a danger that a failure of the mechanical apparatus, a misoperation on the teaching pendant or the like leads to a serious accident.

Such a teaching pendant is provided with an enabling device for selectively enabling outputs of teaching signals as means for avoiding a danger to the operator upon occurrence of an anomaly during teaching to such a mechanical apparatus, as disclosed in Japanese Utility Model Laid-Open Microfilm No. SHO 60-153787 and Japanese Patent Laid-Open Publication No. 2002-059383 for example. Such an enabling device includes an operating switch configured to receive the input of an instruction to output a teaching signal to the mechanical apparatus, and an operable switch disposed on the teaching pendant. This operable switch, also called "deadman switch", is configured to be operable as long as the operator holding the teaching pendant is in a predetermined posture. Only under the condition where the deadman switch is operated, a teaching signal based on an operation performed on the operating switch turned ON is enabled, whereby teaching to the mechanical apparatus becomes possible.

In the case where the mechanical apparatus performs an action unintended by the operator due to a failure of the mechanical apparatus, a misoperation on the teaching device, or the like while the operator is teaching actions to the mechanical apparatus by depressing the operating switch with the deadman switch kept ON by depression, the provision of the enabling device on the teaching pendant makes it possible to stop the mechanical apparatus by disabling an operating signal given to the mechanical apparatus with the deadman switch turned OFF by the operator taking his or her finger off the deadman switch or his or her hands off the teaching pendant.

However, when the mechanical apparatus performs such an operator's unintended action, it is possible that the operator depresses the deadman switch more strongly or holds the teaching pendant more strongly instead of taking his or her finger off the deadman switch or his or her hands off the teaching pendant. Therefore, an ordinary two-position switch configured to be turned ON/OFF simply in response to a depression or a failure of depression is inadequate for the deadman switch.

For this reason, a conventional teaching pendant uses a deadman switch consisting of a three-position switch having a first position which is an OFF-position assumed when undepressed, a second position which is an ON-position displaced from the first position by slightly depressing the switch, and a third position which is an OFF-position displaced from the second position by depressing the switch more strongly. This three-position deadman switch is configured to reset from the third position to the first position without passing through the second position corresponding to the ON-state. This is because the action of the mechanical apparatus need be stopped completely during a period from the time the operator stops the mechanical apparatus to avoid a danger by depressing the deadman switch to the third position until the operator takes his or her finger off the deadman switch completely.

On the other hand, the operator is required to use his or her right hand, left hand or both hands to operate the operable switch depending on the environment in which the teaching pendant is to be used. To accommodate to this situation, one known teaching pendant enabling device comprises two deadman switches, one disposed at a right-hand operating position, the other at a left-hand operating position. This enabling device is configured to enable a teaching signal in accordance with the operated state of at least one deadman switch.

Another problem arises with such an enabling device configured to enable or disable a teaching signal in accordance with the operated state of one of the three-position deadman switches disposed at both of the right-hand operating position and the left-hand operating position of the teaching pendant. Specifically, during teaching to the mechanical apparatus by the operator with the right and left deadman switches depressed to their respective second positions, if the operator depresses only one of the right and left deadman switches to the third position because of occurrence of an anomaly and then takes the hand off the deadman switch thus depressed to the third position after the mechanical apparatus has been stopped, a teaching signal is enabled in accordance with the operated state of the other deadman switch kept in the second position, so that the mechanical apparatus immediately resumes the action before the safety of the operator is ensured, which incurs a high risk of allowing a serious accident to occur.

In attempt to avoid this problem, a configuration such that once either of the right and left deadman switch has been depressed to the third position, a teaching signal is not enabled until both of the deadman switches resume their respective first positions, has been proposed for the enabling device configured to enable or disable a teaching signal in accordance with the operated state of one of the three-position deadman switches disposed at both of the right-hand operating position and the left-hand operating position of the teaching pendant, as disclosed in JP-A-2002 83522.

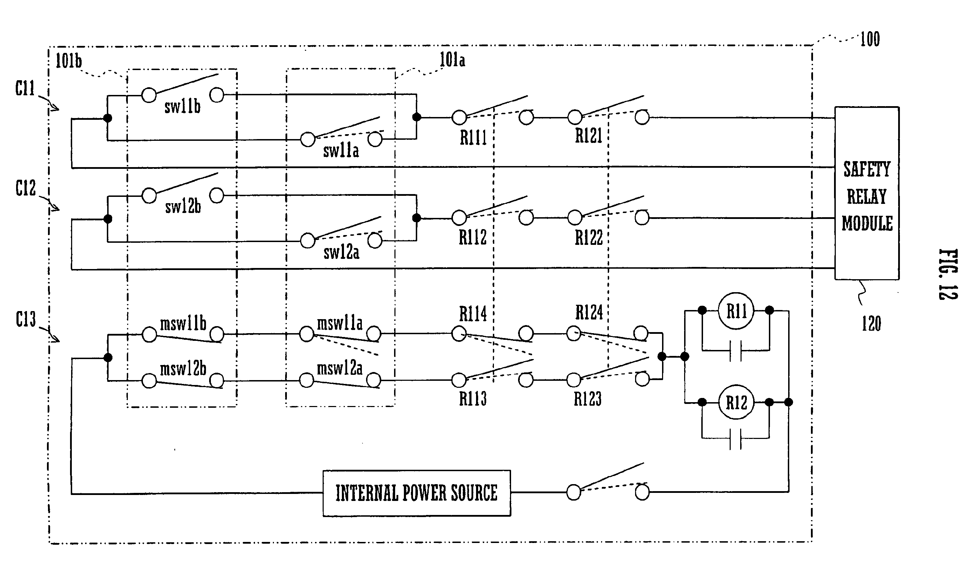

As shown in FIG. 12, a teaching pendant enabling device 100 employing such a configuration includes a first circuit C11, a second circuit C12 and a third circuit C13, and two relays R11 and R12 each having three normally open contacts and one normally closed contact. Under normal condition the enabling device 100 outputs an enabling signal from the first and second circuits C11 and C12 to, for example, a safety relay module 120 of the mechanical apparatus when at least one of right-handed deadman switch 101a and left-handed deadman switch 101b assumes the ON-state by being depressed to the second position. Only when the safety relay module 120 receives inputs of the enabling signal from the first and second circuits C11 and C12 both, the safety relay module 120 enables the teaching signal thereby allowing the operator to teach the mechanical apparatus.

In the first circuit C11, a normally open contact R111 of the relay R11 and a normally open contact R121 of the relay 12 are connected in series with a parallel circuit in which one contact sw11a of the right-handed deadman switch 101a and one contact sw11b of the left-handed deadman switch 101b are connected in parallel.

In the second circuit C12, a normally open contact R112 of the relay R11 and a normally open contact R122 of the relay R12 are connected in series with a parallel circuit in which the other contact sw12a of the right-handed deadman switch 101a and the other contact sw12b of the left-handed deadman switch 101b are connected in parallel.

The third circuit C12 includes: a series circuit in which a normally closed monitor contact msw11a of the right-handed deadman switch 101a, a normally closed monitor contact msw11b of the left-handed deadman switch, a normally closed contact R114 of the relay R11 and a normally closed contact R124 of the relay R12 are connected in series; and a series circuit in which a normally closed monitor contact msw12a of the right-handed deadman switch 101a, a normally closed monitor contact msw12b of the left-handed deadman switch, a normally open contact R113 of the relay R11 and a normally open contact R123 of the relay R12 are connected in series, wherein the two series circuits are connected in parallel to form a parallel circuit which in turn is connected in series with a parallel circuit connecting the relays R11 and R12 in parallel.

The relays R11 and R12 each have a forced guide relay configuration wherein the normally open contacts R113 and R114 as well as the normally closed contacts R123 and R124 change over from each other at the same time. Accordingly, when the normally open contact R113 is turned ON, the normally closed contact R114 is turned OFF without fail. In the initial state where the deadman switches 101a and 101b are unoperated, the relays R11 and R12 are excited by their self-holding function and, hence, the normally open contacts R111 to R113 and R121 to R123 are in ON-state while the normally closed contacts R114 and R124 in OFF-state.

In the aforementioned configuration, when the right-handed deadman switch 101a is made to assume ON-state (depicted by broken line in FIG. 12) from the initial state by being depressed to the second position, the normally open contacts sw11a and sw12a are turned ON and the normally closed monitor contact msw11a turned OFF in the right-handed deadman switch 101a, while the circuits C11 to C13 are kept energized by the self-holding function of the relays R11 and R12. Thus, the enabling signal can be outputted from the first and second circuits C11 and C12 to allow the operator to conduct teaching to the mechanical apparatus.

In this state, if the operator senses a danger and depresses, for example, the left-handed deadman switch 101b to the third position to turn it OFF, the normally closed monitor contacts msw11b and msw12b of the left-handed deadman switch 101b are turned OFF in the third circuit C13 to shut down the third circuit C13 and demagnetize the relays R11 and R12. As a result, the normally open contacts R111 to R113 of the relay R11 and the normally open contacts R121 to R123 of the relay R12 are turned OFF, while at the same time the first and second circuits C11 and C12 shut down. Thus, the enabling signal is not outputted any more and, hence, teaching becomes impossible.

Even when the normally closed contacts sw11b and sw12b are sequentially turned into ON-state from this state by loosening the depressing force on the left-handed deadman switch 101b to reset the left-handed deadman switch 101b to the first position with the right-handed deadman switch 101a kept in ON-state, the normally closed monitor contact msw11a of the right-handed deadman switch 101a and the normally open contacts R113 and R123 of the relays R11 and R12 are still in OFF-state and, hence, the relays R11 and R12 are kept in the demagnetized state. As a result, the first and second circuits C11 and C12 are kept shut down and the ON-state of the right-handed deadman switch 101a cannot be enabled. Thus, the unteachable condition continues.

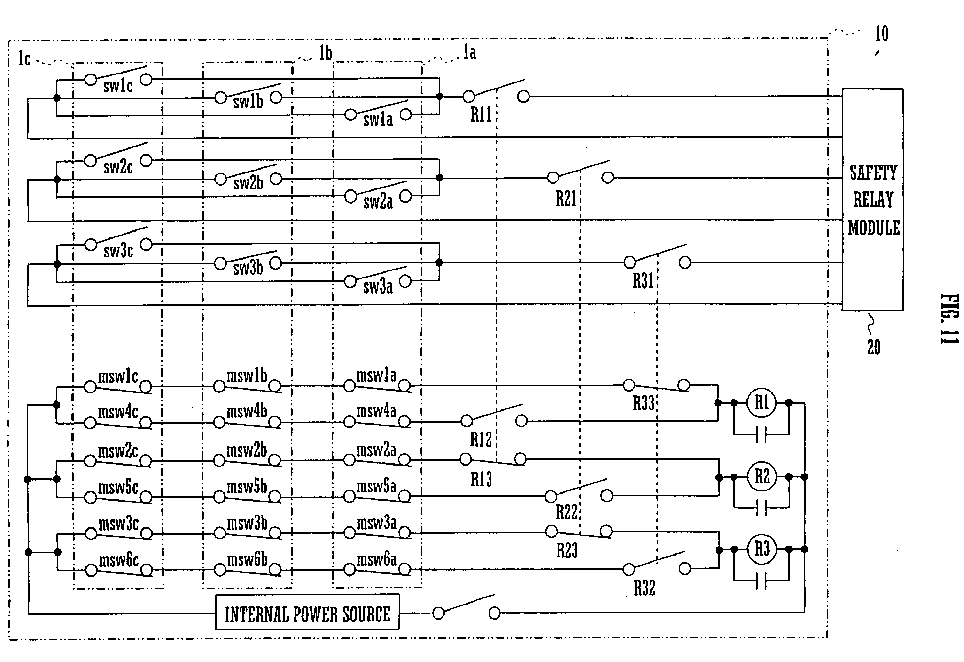

Here, if the depressing force on the right-handed deadman switch 101a is loosened to reset the right-handed deadman switch 101a to the first position, the normally closed monitor contact msw11a of the right-handed deadman switch 101a is turned ON. As a result, the circuit C13 becomes energized to excite the relays R11 and R12, so that the initial state depicted by solid line in FIG. 11 is resumed. Thus, teaching to the mechanical apparatus becomes possible when the right-handed deadman switch 101a or the left-handed deadman switch 101b is operated to assume the second position.

In the configuration shown in FIG. 12, if, for example, the contacts R111 to R113 of the relay R11 are fused to each other while the left-handed deadman switch 101b is ON, the normally open contacts R111 to R113 are kept in ON-state and the normally closed contact R114 kept in OFF-state in the relay R11 even when the right-handed deadman switch 101a is turned OFF by being depressed to the third position. However, since the normally open contacts R121 to R123 are kept OFF and, hence, the circuits C11 to C13 are not energized, the ON-state of the left-handed deadman switch 101b cannot be enabled even when the right-handed deadman switch 101a is reset to the first position, which makes it impossible to conduct teaching to the mechanical apparatus.

In this state, the third circuit C13 is kept from being energized even when both of the deadman switches 101a and 101b are reset to their respective first positions. Accordingly, even when either of deadman switches 101a and 101b is turned ON by being depressed to the second position, the teachable condition cannot be resumed. Therefore, if the contacts of one of the relays R11 and R12 are fused to each other, the enabling signal cannot be outputted even after both of the deadman switches 101a and 101b have been reset to respective first positions, whereby the occurrence of a failure of the contacts can be recognized easily.

In the case where the safety relay module 120 is configured to detect mismatch in open/closed state between the first and second circuits C11 and C12, one of the normally open contacts R111 and R112 of the relay R11 and one of the normally open contacts R121 and R122 of the relay R12 may be eliminated so that each of the first and second circuits C11 and C12 includes one normally open contact. In this case, if failure of contact occurs in the enabling device 100, it is possible to accurately determine from the result of detection by the safety relay module 120 which of the first and second circuits C11 and C12 has fusion of contacts.

The configuration described in the aforementioned patent literature 2, however, involves the following problem. That is, with the configuration shown in FIG. 12 wherein: a single monitor circuit (third circuit C3) monitors the operated states of respective three-position deadman switches 101a and 10b included in the teaching pendant; and switching means (relays R11 and R12) of opening/closing the output lines for outputting the enabling signal from the enabling signal circuits (first and second circuits C1 and C2) is actuated in accordance with the open/closed state of the monitor circuit, if the single monitor circuit is short-circuited, the monitor circuit cannot detect the occurrence of such a failure and, hence, the switching means closes the enabling signal circuit constantly, with the result that the action of the subject mechanical apparatus to be taught cannot be stopped.

An object of the present invention is to provide a teaching pendant enabling device which is capable of accurately detecting a single failure while preventing its safety function from being impaired by a single short-circuit failure by virtue of the provision of plural monitor circuits for actuating the switching means configured to open/close the enabling signal circuit in accordance with the results of monitoring of the operated states of respective of right and left deadman switches.

### Disclosure of the Invention

The present invention includes the following arrangements as means for solving the aforementioned problem.
(1) A teaching pendant enabling device including first and second enabling signal circuits each configured to selectively output an enabling signal for enabling a teaching signal given to a mechanical apparatus in accordance with operated states of first and second deadman switches each configured to assume a first OFF-state when unoperated, an ON-state when half-operated, and a second OFF-state when completely operated, having:
   two switching means configured to open/close an enabling signal output line of a respective one of the first and second enabling signal circuits; and
   first and second monitor circuits each configured to actuate a respective one of the two switching means in accordance with results of detection of the operated states of the first and second deadman switches,
   wherein, after an operating member of at least one of the first and second deadman switches has been turned into the second OFF-state, each of the first and second monitor circuits causes the respective one of the two switching means to keep the output line in an open state until both of the first and second deadman switches each made to assume the first OFF-state are detected.
   In this arrangement, during a period from the time at least one of the first and second deadman switches is turned into the second OFF-state until both of the two deadman switches each made to assume the first OFF-state are detected by both of the two monitor circuits, at least one of the enabling signal output lines is kept an open state. Accordingly, if one of the two monitor circuits is short-circuited, the monitor circuit thus short-circuited fails to detect the first and second deadman switches each made to assume the first OFF-state, whereas the monitor circuit that is not short-circuited causes the switching means to keep open the associated enabling signal output line. Thus, mismatch occurs in signal output between the two enabling signal circuits, which allows easy detection of occurrence of an anomaly in the enabling device. For this reason, this arrangement is capable of accurately detecting a single failure while preventing its safety function from being impaired.
(2) The first deadman switch has:
   first to fourth normally closed contacts each configured to become open or closed in accordance with any one of operated positions including a first position assumed in an unoperated condition, a second position assumed in a half-operated condition, and a third position assumed in a completely operated condition; and
   first and second main contacts each configured to assume an OFF-state at the first and third positions and an ON-state at the second position,
      wherein the second deadman switch has:
      fifth to eighth normally closed contacts each configured to become open or closed in accordance with any one of operated positions including a first position assumed in an unoperated condition, a second position assumed in a half-operated condition, and a third position assumed in a completely operated condition; and
      third and fourth main contacts each configured to assume an OFF-state at the first and third positions and an ON-state at the second position,
   wherein the two switching means are first and second relays, the first relay having first and second normally open contacts and a ninth normally closed contact; and the second relay having third and fourth normally open contacts and a tenth normally closed contact,
   wherein the first enabling signal circuit includes the first normally open contact connected in series with a parallel circuit parallel-connecting the first and third main contacts; and the second enabling signal circuit includes the third normally open contact connected in series with a parallel circuit parallel-connecting the second and fourth main contacts, and
   wherein the first monitor circuit connects the first relay in series with a parallel circuit parallel-connecting a first series circuit in which the first, fifth, and tenth normally closed contacts are connected in series and a second series circuit in which the third and seventh normally closed contacts and the second normally open contact are connected in series; and the second monitor circuit connects the second relay in series with a parallel circuit parallel-connecting a third series circuit in which the second, sixth, and ninth normally closed contacts are connected in series and a fourth series circuit in which the fourth and eighth normally closed contacts and the fourth normally open contact are connected in series.
      In this arrangement, when excited, the relays included in the two monitor circuits closes respective of the output lines of the two enabling signal circuits. The relay included in the monitor circuit in a state shut down by turning one of the deadman switches into the second OFF-state is not energized unless the remaining monitor circuit is shut down. Accordingly, when the remaining monitor circuit is short-circuited, the relay included therein is kept excited continuously and, hence, the output line of one of the two enabling signal circuit is kept closed continuously. However, the relay included in the remaining monitor circuit keeps open the output line of the other enabling signal circuit. Accordingly, it is not possible that the enabling signal is outputted from both of the two output lines.
(3) A teaching pendant enabling device including plural enabling signal circuits each configured to selectively output an enabling signal for enabling a teaching signal given to a mechanical apparatus in accordance with operated states of plural deadman switches each configured to assume a first OFF-state when unoperated, an ON-state when half-operated, and a second OFF-state when completely operated, having:
   three or more switching means each configured to open/close an enabling signal output line of a respective one of the plural enabling signal circuits; and
   three or more monitor circuits each configured to actuate a respective one of the three or more switching means in accordance with results of detection of the operated states of the plural deadman switches,
   wherein, after an operating member of at least one of the deadman switches has been turned into the second OFF-state, each of the three or more monitor circuits causes the respective one of the switching means to keep the output line in an open state until all of the plural deadman switches each made to assume the first OFF-state are detected.

In this arrangement, when excited, the relays included in the monitor circuits close respective of the enabling signal output lines of the plural enabling signal circuits. The relay included in one monitor circuit in a state shut down by turning any one of the deadman switches into the second OFF-state is not energized unless the remaining monitor circuits are shut down. Accordingly, when any one of the remaining monitor circuits is short-circuited, the relay included therein is kept excited continuously and, hence, the output line of any one of the plural enabling signal circuits is kept closed continuously. However, the relays included in the monitor circuits that are not short-circuited keep open the associated output lines of the plural enabling signal circuits. Accordingly, it is not possible that the enabling signals are outputted from all of the plural output lines.

### Brief Description of Drawings

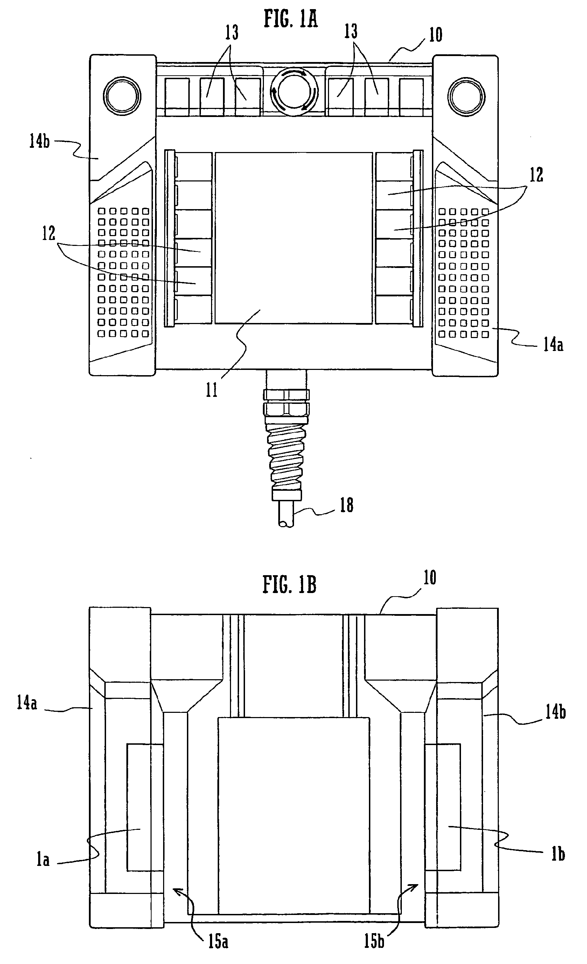

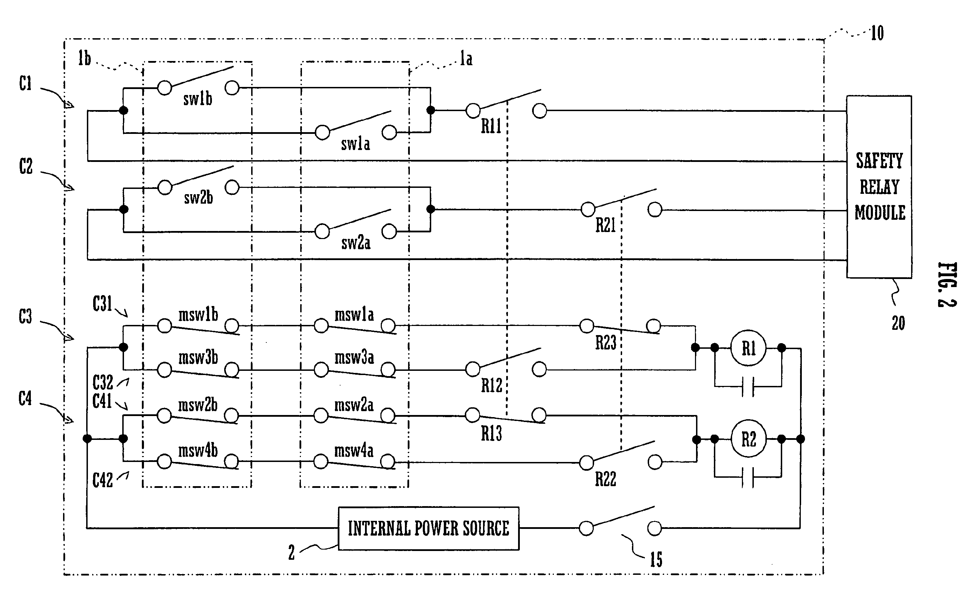

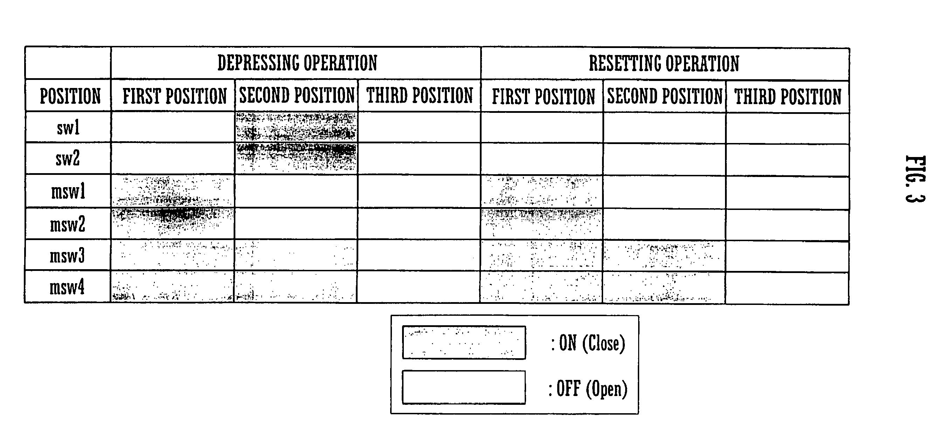

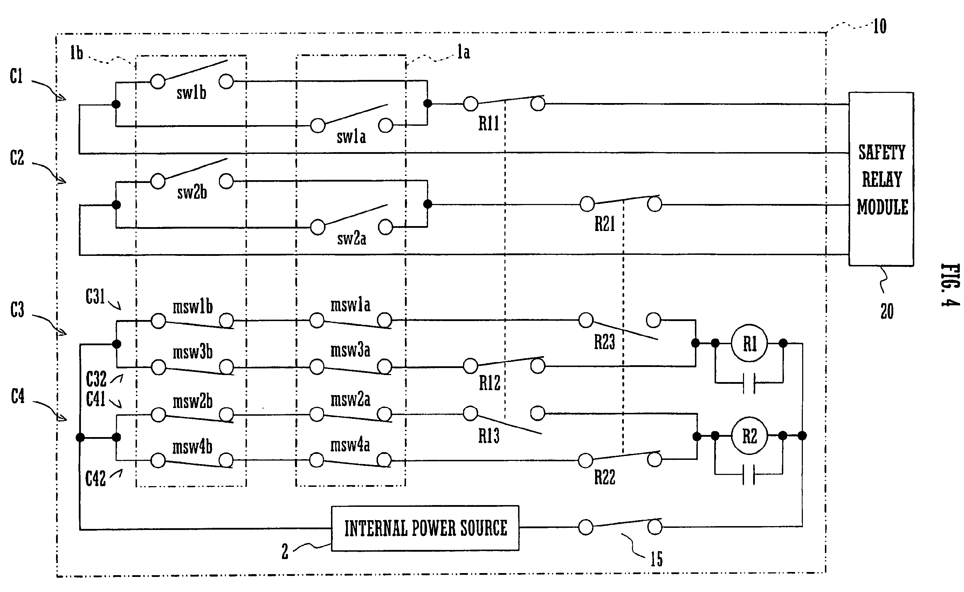

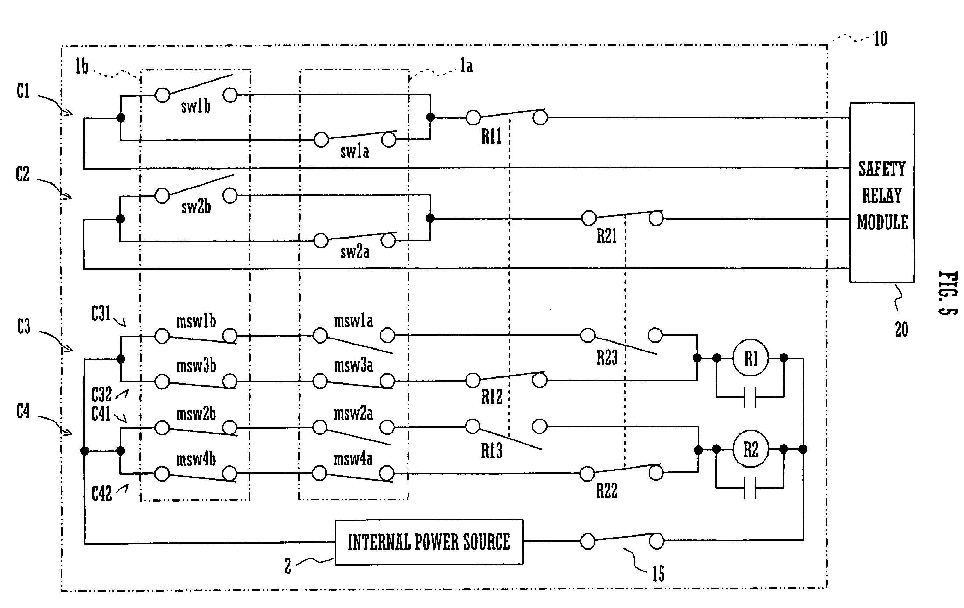

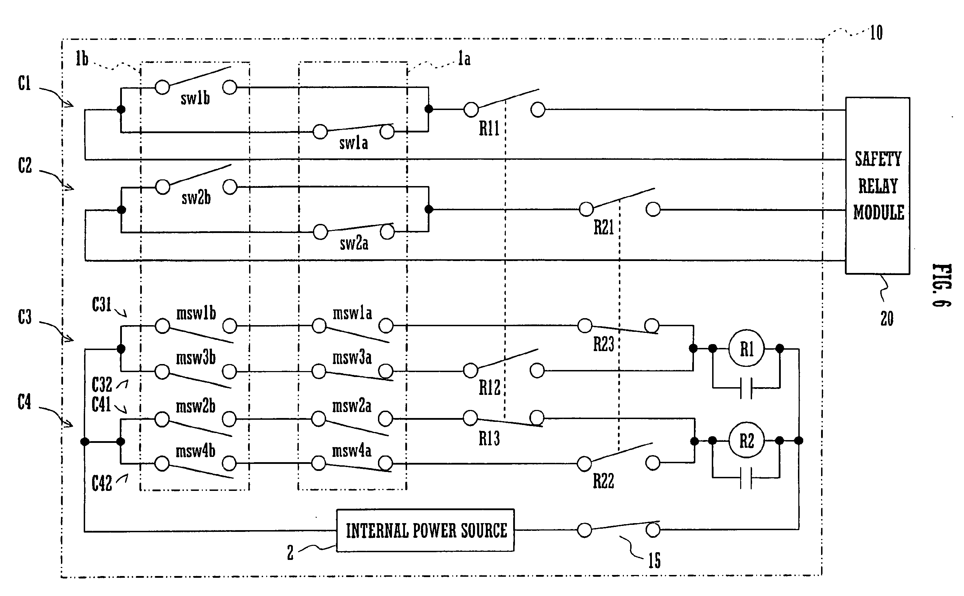

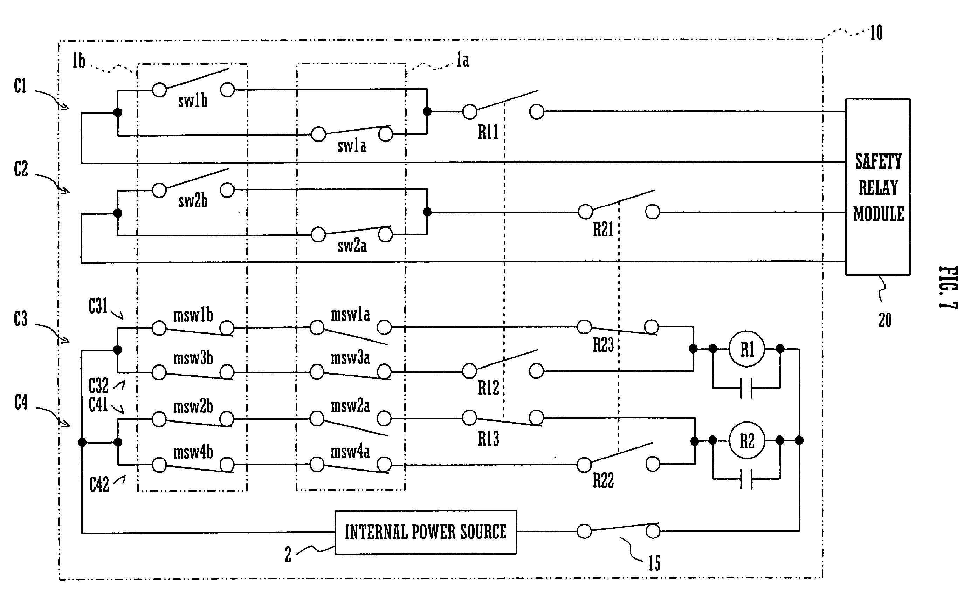

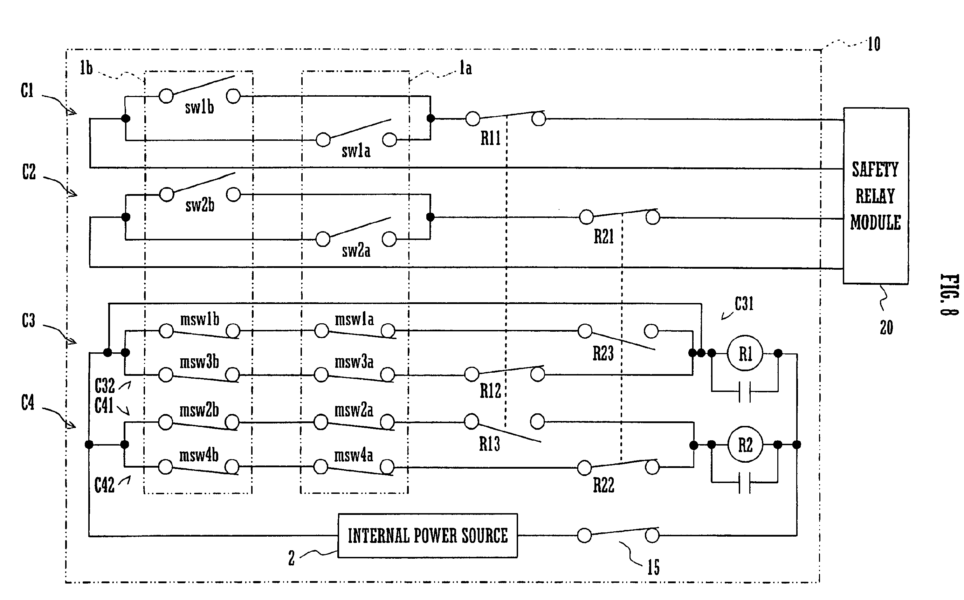

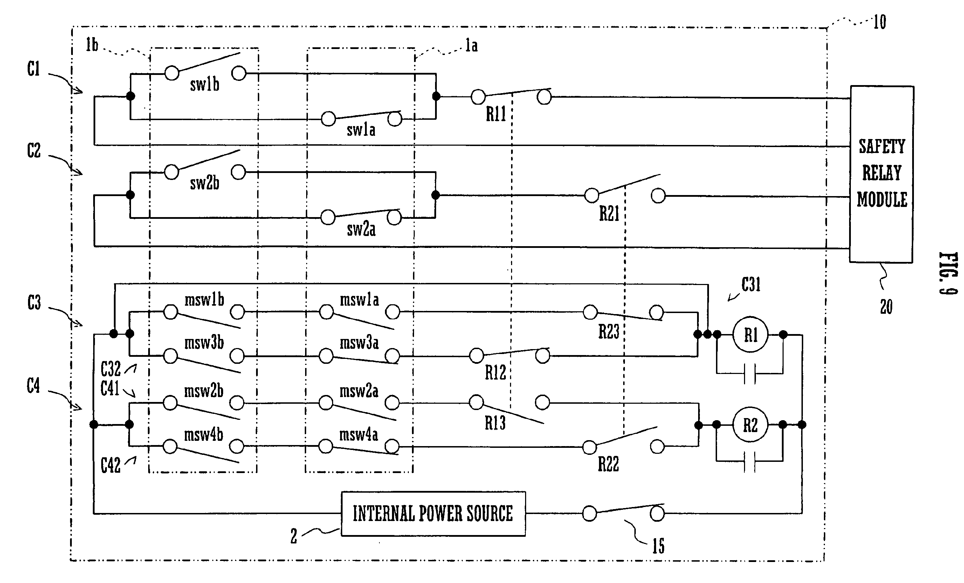

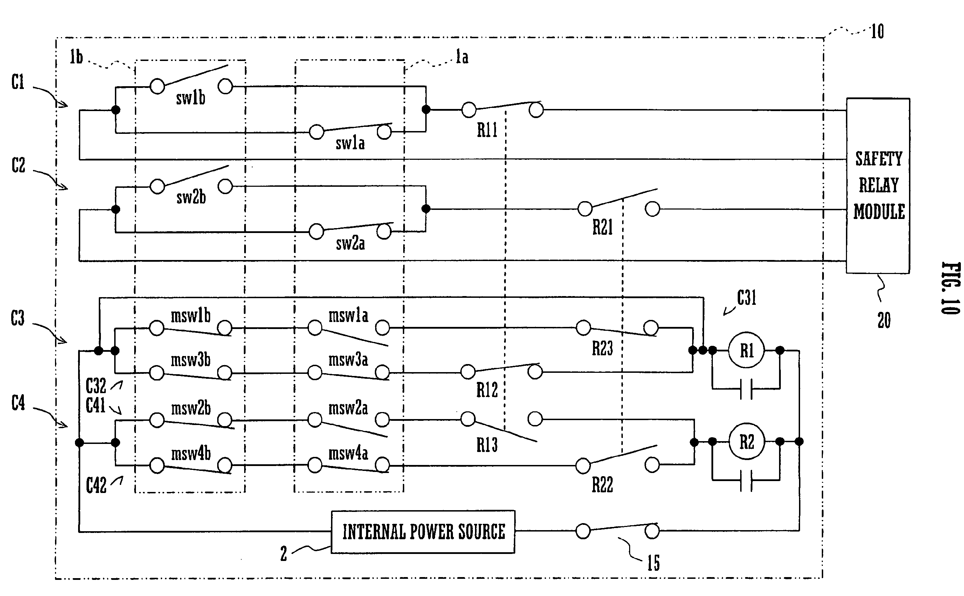

FIGs. 1A and 1B are front and rear elevational views, respectively, showing a teaching pendant in which an enabling device according to an embodiment of the present invention is used. FIG. 2 is a circuit diagram showing the configuration of the enabling device. FIG. 3 is a chart representing open/closed states of contacts of deadman switches included in the enabling device. FIG. 4 is a circuit diagram of the enabling device in a state where the deadman switches are unoperated. FIG. 5 is a circuit diagram of the enabling device in a state where a first deadman switch is operated to assume the second position. FIG. 6 is a circuit diagram of the enabling device in a state where the first deadman switch is operated to assume the second position and a second deadman switch operated to assume the third position. FIG. 7 is a circuit diagram of the enabling device in a state where the first deadman switch is operated to assume the second position and the second deadman switch reset to the first position from the third position. FIG. 8 is a circuit diagram of the enabling device in a state where the deadman switches are unoperated, with a first monitor circuit short-circuited. FIG. 9 is a circuit diagram of the enabling device in a state where the first deadman switch is operated to assume the second position and the second deadman switch operated to assume the third position, with the first monitor circuit short-circuited. FIG. 10 is a circuit diagram of the enabling device in a state where the first deadman switch is operated to assume the second position and the second deadman switch reset to the first position from the third position, with the first monitor circuit short-circuited. FIG. 11 is a circuit diagram showing the configuration of an enabling device according to another embodiment of the present invention. FIG. 12 is a circuit diagram of a conventional enabling device.

### Best Mode for Carrying Out the Invention

FIGs. 1A and 1B are front and rear elevational views, respectively, showing a teaching pendant in which an enabling device according to an embodiment of the present invention is used. The pendant 10 has a display panel 11, such as an LCD, disposed centrally of the front side of its casing. A row of transparent operation keys 12 are arranged on a transparent touch switch on each of opposite lateral sides of the upper surface of the display panel 11. When pressed, each of the operation keys 12 is displaced downwardly to turn ON the touch switch provided on the upper surface of the display panel 11. Plural pushbutton switches 13 are arranged above the display panel 11 on the front side of the pendant 10. The operation keys 12 and pushbutton switches 13 are each configured to receive an input of an instruction to output an operating signal assigned to a respective one of the keys and switches. Particularly, the operation keys 12 are each assigned the particulars of a switch image on each screen displayed on the display panel 11. The display panel 11 may be configured to serve as an operation switch by using a touch panel.

The casing of the pendant 10 is formed with grips 14a and 14b on right and left lateral sides thereof. During teaching of actions to a non-illustrated subject apparatus to be taught such as an industrial robot, the operator holds the pendant 10 by his or her both hands from the opposite lateral sides and operates the operation keys 12 or the pushbutton switches 13 by the thumbs. The pendant 10 is connected to a control circuit of the subject apparatus via a cable 18 so that an operating signal assigned to the operation key 12 or the pushbutton switch 13 which is operated by the operator is inputted to the control circuit of the subject apparatus.

The rear side of casing of the pendant 10 is formed with dents 15a and 15b continuously with respective grips 14a and 14b. Deadman switches 1a and 1b are disposed on angular portions intermediate the grips 14a and 14b and the dents 15a and 15b. The deadman switch 1a is a right-handed deadman switch located at a right-hand operating position where the four fingers, excluding the thumb, of the right hand of the operator gripping the grip 14a situated on the right-hand side as viewed from the front side of the pendant 10 are to be positioned. The deadman switch 1b is a left-handed deadman switch located at a left-hand operating position where the four fingers, excluding the thumb, of the left hand of the operator gripping the grip 14b situated on the left-hand side as viewed from the front side of the pendant 10 are to be positioned.

The deadman switches 1a and 1b are each a three-position switch having main contact positions including a first position assumed in an unoperated condition, a second position assumed in a lightly depressed condition, i.e., in a half-operated condition, and a third position assumed in a strongly depressed condition, i.e., in a completely-operated condition. The main contact position shifts from the first position to the third position sequentially. When the operating force is released, each deadman switch is reset to the first position from the third position.

FIG. 2 is a circuit diagram showing the configuration of the enabling device according to this embodiment of the present invention. The enabling device incorporated in the teaching pendant 10 comprises a first enabling signal circuit C1, a second enabling signal circuit C2, a first monitor circuit C3, and a second monitor circuit C4, the circuits C1 to C4 comprising contacts included in the right and left deadman switches 1a and 1b and relays R1 and R2. The first and second monitor circuits C3 and C4 are supplied with electric power from an internal power source 2 via a main switch 15.

The right-handed deadman switch 1a is a three-position deadman switch having six contacts including: normally closed contacts msw1a, msw2a, msw3a, and msw4a which are each configured to become open and closed in accordance with any one of the operated positions, namely, the first position assumed in the unoperated condition, the second position assumed in the half-operated condition and the third position assumed in the completely-operated condition; and two main contacts sw1a and sw2a each configured to assume an OFF-state at the first and third positions and an ON-state at the second position.

Like the right-handed deadman switch 1a, the left-handed deadman switch 1b is a three-position deadman switch having six contacts including: normally closed contacts msw1b, msw2b, msw3b, and msw4b which are each configured to become open and closed in accordance with any one of the operated positions, namely, the first position assumed in the unoperated condition, the second position assumed in the half-operated condition and the third position assumed in the completely operated condition; and two main contacts sw1b and sw2b each configured to assume an OFF-state at the first and third positions and an ON-state at the second position.

The operated conditions of the deadman switches 1a and 1b and the ON/OFF states of respective contacts are as shown in FIG. 3. In this figure, each halftone segment represents the ON-state of a respective one of the contacts.

The relay R1 has two normally open contacts R11 and R12 and one normally closed contact R13. Likewise, the relay R2 has two normally open contacts R21 and R22 and one normally closed contact R23.

The first enabling signal circuit C1 is formed by connecting one normally open contact R11 of the relay R1 in series with a parallel circuit in which the main contact sw1a and the main contact sw1b of respective of the right and left deadman switches 1a and 1b are connected in parallel.

The second enabling signal circuit C2 is formed by connecting the normally open contact R21 of the relay R2 in series with a parallel circuit in which the main contact sw2a and the main contact sw2b of respective of the right and left deadman switches 1a and 1b are connected in parallel.

The first monitor circuit C3 is formed by connecting the relay R1 in series with a parallel circuit parallel-connecting a first series circuit C31 in which the normally closed contact msw1a included in the deadman switch 1a, the normally closed contact msw1b included in the deadman switch 1b, and the normally closed contact R23 of the other relay R2 are connected in series and a second series circuit C32 in which the normally closed contact msw3a included in the deadman switch 1a, the normally closed contact msw3b included in the deadman switch 1b, and the normally open contact R12 of the relay R1 are connected in series.

The second monitor circuit C4 is formed by connecting the relay R2 in series with a parallel circuit parallel-connecting a third series circuit C41 in which the normally closed contact msw2a included in the deadman switch 1a, the normally closed contact msw2b included in the deadman switch 1b, and the normally closed contact R13 of one relay R1 are connected in series and a fourth series circuit C42 in which the normally closed contact msw4a included in the deadman switch 1a, the normally closed contact msw4b included in the deadman switch 1b, and the normally open contact R22 of the relay R2 are connected in series.

In the above-described configuration, the relays R1 and R2 correspond to the switching means of the present invention.

The operation of the above-described enabling device will be described below with reference to FIGs. 4 to 7. FIG. 4 shows a state where the deadman switches are in the unoperated condition while the main switch of the teaching pendant is ON; FIG. 5 shows a state where one deadman switch is operated to assume the second position; FIG. 6 shows a state where one deadman switch is kept in the second position and the other deadman switch is operated to assume the third position; and FIG. 7 shows a state where one deadman switch is kept in the second position and the other deadman switch is reset to the first position.

When the main switch 15 is turned ON in the state shown in FIG. 2, the internal powder source 2 energizes the first series circuit C31 of the first monitor circuit C3 and the third series circuit C41 of the second monitor circuit C4 thereby exciting the relays R1 and R2. This causes the normally open contacts R11 and R12 and the normally open contacts R21 and R22 to be turned ON and the normally closed contacts R13 and R23 to be turned OFF in the relays R1 and R2, whereby the enabling signal output lines of respective of the first and second enabling signal circuits C1 and C2 are closed as shown in FIG. 4. The relays R1 and R2 are kept energized via the second series circuit C32 of the first monitor circuit C3 and the fourth series circuit C42 of the second monitor circuit C4, respectively, so that the state shown in FIG. 4 is maintained.

When the right-handed deadman switch 1a is operated to assume the second position from the state shown in FIG. 4, the main contacts sw1a and sw2a are turned ON and the normally closed contacts msw1a and msw2a turned OFF in the deadman switch 1a, as shown in FIG. 5. Since the main contacts sw1a and sw2a of the deadman switch 1a are turned ON, the first and second enabling signal circuits C1 and C2 output an enabling signal to an external safety relay module 20. The relays R1 and R2 are kept energized via the second series circuit C32 of the first monitor circuit C3 and the fourth series circuit C42 of the second monitor circuit C4, respectively, so that the state shown in FIG. 5 is maintained. As a result, teaching to the mechanical apparatus via a non-illustrated controller including the safety relay module 20 becomes possible by means of a teaching signal corresponding to an operation on operation switch 12 or the like included in the teaching pendant 10.

When the left-handed deadman switch 1b is operated to assume the third position from the state shown in FIG. 5 with the right-handed deadman switch 1a kept in the second position, the normally closed contacts msw1b to msw4b of the deadman switch 1b are turned OFF as shown in FIG. 6, so that the first and second series circuits C31 and C32 forming the first monitor circuit C3 and the third and fourth series circuits C41 and C42 forming the second monitor circuit C4 are opened to shut down the relays R1 and R2, whereby the relays R1 and R2 are demagnetized. This causes the normally open contacts R11 and R21 of the relays R1 and R2 to be turned OFF thereby opening the enabling signal output lines of the enabling signal circuits C1 and C2. Accordingly, the enabling signal is not inputted to the external safety relay module 20 any more. As a result, teaching to the mechanical apparatus becomes impossible and, hence, the operator can avoid danger.

When the left-handed deadman switch 1b is rest to the first position from the state shown in FIG. 6 with the right-handed deadman switch 1a kept in the second position, the normally closed contacts msw1b to msw4b of the deadman switch 1b are turned ON whereas the normally closed contacts msw1a and msw2a of the deadman switch 1a as well as the normally open contacts R12 and R22 of respective relays R1 and R2 are kept OFF, as shown in FIG. 7. Accordingly, the first and second series circuits C31 and C32 forming the first monitor circuit C3 and the third and fourth series circuits C41 and C42 forming the second monitor circuit C4 are kept open and, hence, the relays R1 and R2 cannot be excited. Thus, the enabling signal output lines of the enabling signal circuits C1 and C2 are each kept in the open state.

After the mechanical apparatus has been stopped by keeping one deadman switch in the second position while operating the other deadman switch to assume the third position, even if the operator takes his hand off the other deadman switch before it becomes possible to secure sufficient safety, the mechanical apparatus cannot immediately begin acting. As a result, the operator cannot be exposed to danger.

When the right-handed deadman switch 1a also is reset to the first position from the state shown in FIG. 7, the enabling device resumes the state shown in FIG. 4 from the state shown in FIG. 7 through the state in which the main switch 15 is ON. Thus, it becomes possible for the enabling device to output the enabling signal by operating either of the deadman switches 1a and 1b and, hence, teaching to the mechanical apparatus becomes possible.

With reference to FIGs. 8 to 11, consideration will be given to cases where a monitor circuit of the enabling device is short-circuited. If, for example, the first monitor circuit C3 is short-circuited as shown in FIG. 8, the first monitor circuit C3 is constantly energized regardless of the operated states of respective deadman switches 1a and 1b and, hence, the relay R1 is kept excited. In this state, when the left-handed deadman switch 1b is operated to assume the third position with the right-handed deadman switch 1a kept in the second position, the normally closed contacts msw3b and msw4b of the deadman switch 1b are turned OFF to open the third and fourth series circuits C41 and C42 forming the second monitor circuit C4 as shown in FIG. 9, so that the relay R2 is shut down and demagnetized. Thus, the normally open contact R21 of the relay R2 is turned OFF to open the enabling signal output line of the second enabling signal circuit C2, with the result that the enabling signal cannot be inputted to the external safety module 20 from the second enabling signal circuit C2.

At that time the relay R1 is kept excited to keep the normally open contact R11 thereof ON because of the short circuit in the first monitor circuit C3, thus keeping the first enabling signal circuit C1 inputting the enabling signal to the external safety relay module 20. However, since the safety relay module 20 enables the teaching signal from the teaching pendant 10 only when both of the first and second enabling signal circuits C1 and C2 input the enabling signal to the safety relay module 20, teaching to the mechanical apparatus becomes impossible from the time the input of the enabling signal from the second enabling signal circuit C2 is stopped, thus causing the mechanical apparatus to stop acting. Therefore, the operator can avoid danger.

When the left-handed deadman switch 1b is rest to the first position from the state shown in FIG. 9 with the right-handed deadman switch 1a kept in the second position, the normally closed contacts msw3b and msw4b of the deadman switch 1b are turned ON whereas the normally closed contact msw2a of the deadman switch 1a as well as the normally open contact R22 of the relay R2 is kept OFF, as shown in FIG. 10. Accordingly, the third and fourth series circuits C41 and C42 forming the second monitor circuit C4 are kept open and, hence, the relay R2 cannot be excited. Thus, the enabling signal output line of the enabling signal circuit C2 is kept in the open state.

Though FIGs. 8 to 10 show the case where only the first monitor circuit C3 is short-circuited, the relay R1 included in the first monitor circuit C3 functions like the relay R2 functioning as shown in FIGs. 8 to 10 if only the second monitor circuit C4 is short-circuited. In this case, when one deadman switch is operated to assume the third position, the enabling signal output line of the first enabling signal circuit C1 is opened.

In cases where the relay R1 or R2 is kept excited because of one monitor circuit short-circuited, after the mechanical apparatus has been stopped by the operator keeping one deadman switch in the second position while operating the other deadman switch to assume the third position, the mechanical apparatus cannot immediately begin acting even if the operator takes his hand off the other deadman switch before it becomes possible to secure sufficient safety. As a result, the operator is prevented from being exposed to danger. When one monitor circuit is short-circuited, the first and second enabling signal circuits C1 and C2 output different signals, which allow detection of occurrence of failure in the enabling device.

Thus, the teaching pendant enabling device according to this embodiment is capable of accurately detecting a single failure while preventing its safety function from being impaired by a single short-circuit failure.

FIG. 11 is a circuit diagram showing the configuration of an enabling device according to another embodiment of the present invention. The enabling device 10' according to this embodiment is applied to a teaching pendant having three three-position switches 1a to 1c, each of which has three main contacts and two sets of three normally closed contacts. Specifically, switch 1a has three main switches sw1a to sw3a and two sets of three normally closed contacts msw1a to msw6a (including a set of normally closed contacts msw1a to msw3a and a set of normally closed contacts msw4a to msw6a); switch 1b has three main switches sw1b to sw3b and two sets of three normally closed contacts msw1b to msw6b (including a set of normally closed contacts msw1b to msw3b and a set of normally closed contacts msw4b to msw6b); and switch 1c has three main switches sw1c to sw3c and two sets of three normally closed contacts msw1c to msw6c (including a set of normally closed contacts msw1c to msw3c and a set of normally closed contacts msw4c to msw6c.) Also, the enabling device 10' has three relays R1 to R3. Thus, the enabling device 10' has three enabling signal circuits and three monitor circuits formed therein. By thus adding a contact and a relay to each three-position switch to form three or more monitor circuits, the enabling device 10' is capable of accurate detection of occurrences of plural duplicated failures.

The number of enabling signal circuits and the number of monitor circuits need not necessarily be equal to each other. For example, it is possible to form two enabling signal circuits and four monitor circuits and then connect the output line of each of the two enabling signal circuits in series with two contacts of each of the relays included in two different monitor circuits. Also, the number of three-position switches provided on the teaching pendant need not necessarily be three as long as the number is plural.

Accordingly, the present invention can also be embodied into an enabling device applicable to a teaching pendant provided with plural three-position switches each having two sets of three or more (2+n) normally closed contacts (wherein n is an integer of not less than 1), the enabling device having m enabling signal circuits (wherein m is an integer of not less than two) and three or more (2+n) monitor circuits wherein n is an integer of not less than 1.)

Specifically, the ith (i=1, ..., m) enabling signal circuit is formed by connecting, without duplication (nothing more or nothing less), at least one normally open contact of the 2+n relays in series with a parallel circuit in which main contacts of respective of the three-position switches are connected in parallel. Also, the jth (j=1, 2, ..., 2+n) monitor circuit is formed by connecting the jth relay in series with a parallel circuit parallel-connecting a first series circuit in which the jth normally closed contact in one of the sets of normally closed contacts included in each three-position switch is connected in series with the normally closed contact of any one of the relays except the jth relay without duplication (nothing more or nothing less) and a second series circuit in which the jth normally closed contact in the other set of normally closed contacts included in each three-position switch is connected in series with one normally open contact of the jth relay without duplication (nothing more or nothing less.)

With this configuration, even if 2+n-1 monitor circuits of the 2+n monitor circuits are short-circuited at the same time, the relay included in at least one monitor circuit opens the output line of at least one enabling signal circuit. Thus, there is no possibility that output signals from all the m enabling signal circuits match with each other, which allows accurate detection of the occurrence of failure in the enabling device.

In the case where each relay has m+1 normally open contacts, one normally open contact of each relay may be connected in series with a respective one of the enabling signal circuits.

## Claims

1. A teaching pendant enabling device including first and second enabling signal circuits (C1, C2) each configured to selectively output an enabling signal for enabling a teaching signal given to a mechanical apparatus in accordance with operated states of first and second deadman switches (1a, 1b) each configured to assume a first OFF-state when unoperated, an ON-state when half-operated, and a second OFF-state when completely operated, comprising:
two switching means (R1, R2) configured to open/close an enabling signal output line of a respective one of the first and second enabling signal circuits; and
first and second monitor circuits (C3, C4) each configured to actuate a respective one of the two switching means in accordance with results of detection of the operated states of the first and second deadman switches,
wherein, after an operating member of at least one of the first and second deadman switches has been turned into the second OFF-state, each of the first and second monitor circuits causes the respective one of the two switching means to keep the output line in an open state until both of the first and second deadman switches each made to assume the first OFF-state are detected.

2. The teaching pendant enabling device according to claim 1,
wherein the first deadman switch (1a) has:
first to fourth normally closed contacts (msw 1a-4a) each configured to become open or closed in accordance with any one of operated positions including a first position assumed in an unoperated condition, a second position assumed in a half-operated condition, and a third position assumed in a completely operated condition; and
first and second main contacts (sw1a, sw2a) each configured to assume an OFF-state at the first and third positions and an ON-state at the second position,
wherein the second deadman switch (1b) has:
fifth to eighth normally closed contacts (msw 1b-4b) each configured to become open or closed in accordance with any one of operated positions including a first position assumed in an unoperated condition, a second position assumed in a half-operated condition, and a third position assumed in a completely operated condition; and
third and fourth main contacts (sw1b-sw2b) each configured to assume an OFF-state at the first and third positions and an ON-state at the second position,
wherein the two switching means are first and second relays (R1, R2), the first relay (R1) having first and second normally open contacts (R11, R12) and a ninth normally closed contact (R13); and the second relay (R2) having third and fourth normally open contacts (R21, R22) and a tenth normally closed contact (R23),
wherein the first enabling signal circuit (C1) includes the first normally open contact (R11) connected in series with a parallel circuit parallel-connecting the first and third main contacts (sw1a, sw1b); and the second enabling signal circuit (C2) includes the third normally open contact (R21) connected in series with a parallel circuit parallel-connecting the second and fourth main contacts (sw2a, sw2b) and
wherein the first monitor circuit (C3) connects the first relay (R1) in series with a parallel circuit parallel-connecting a first series circuit (C31) in which the first, fifth, and tenth normally closed contacts (msw1a, msw1b, R23) are connected in series and a second series circuit (C32) in which the third and seventh normally closed contacts (msw3a, msw3b) and the second normally open contact (R12) are connected in series; and the second monitor circuit (C4) connects the second relay (R2) in series with a parallel circuit parallel-connecting a third series circuit (C41) in which the second, sixth, and ninth normally closed contacts (msw2a, msw2b, R13) are connected in series and a fourth series circuit (C42) in which the fourth and eighth normally closed contacts (msw4a, msw4b) and the fourth normally open contact (R22) are connected in series.

3. A teaching pendant enabling device including plural enabling signal circuits each configured to selectively output an enabling signal for enabling a teaching signal given to a mechanical apparatus in accordance with operated states of plural deadman switches each configured to assume a first OFF-state when unoperated, an ON-state when half-operated, and a second OFF-state when completely operated, comprising:
three or more switching means each configured to open/close an enabling signal output line of a respective one of the plural enabling signal circuits; and
three or more monitor circuits each configured to actuate a respective one of the three or more switching means in accordance with results of detection of the operated states of the plural deadman switches,
wherein, after an operating member of at least one of the deadman switches has been turned into the second OFF-state, each of the three or more monitor circuits causes the respective one of the switching means to keep the output line in an open state until all of the plural deadman switches each made to assume the first OFF-state are detected.

## Patentansprüche

1. Programmierhandgerät-Freigabevorrichtung, mit ersten und zweiten Freigabesignalschaltungen (C1, C2), wovon jede konfiguriert ist, um wahlweise ein Freigabesignal auszugeben, um ein Programmiersignal, das in eine mechanische Vorrichtung eingegeben wird, in Übereinstimmung mit Betriebszuständen erster und zweiter Totmannschalter (1a, 1b), wovon jeder konfiguriert ist, um einen ersten AUS-Zustand, wenn nicht in Betrieb, einen EIN-Zustand, wenn teilweise in Betrieb, und einen zweiten AUS-Zustand, wenn vollständig in Betrieb, annehmen kann, freizugeben, mit:
zwei Schaltmitteln (R1, R2), die konfiguriert sind, um eine Freigabesignal-Ausgangsleitung einer Entsprechenden der ersten und der zweiten Freigabesignalschaltungen zu öffnen/zu schließen; und
ersten und zweiten Überwachungsschaltungen (C3, C4), wovon jede konfiguriert ist, um ein Entsprechendes der zwei Schaltmittel in Übereinstimmung mit den Ergebnissen der Detektion der Betriebszustände der ersten und der zweiten Totmannschalter zu betätigen,
wobei, nachdem ein Betätigungselement der ersten und/oder der zweiten Totmannschalter in den zweiten AUS-Zustand geschaltet worden ist, sowohl die ersten als auch die zweiten Überwachungsschaltungen das Entsprechende der zwei Schaltmittel dazu veranlasst, die Ausgangsleitung in einem geöffneten Zustand zu halten, bis detektiert wird, dass sowohl die ersten als auch die zweiten Totmannschalter jeweils veranlasst worden sind, den ersten AUS-Zustand anzunehmen.

2. Programmierhandgerät-Freigabevorrichtung nach Anspruch 1,
wobei der erste Totmannschalter (1a) besitzt:
erste bis vierte normalerweise geschlossene Kontakte (msw 1a-4a), wovon jeder konfiguriert ist, um in Übereinstimmung mit irgendeiner der Betriebspositionen, die eine erste Position, die in einem betriebslosen Zustand angenommen wird, eine zweite Position, die in einem teilweise betätigten Zustand angenommen wird, und eine dritte Position, die in einem vollständig betätigten Zustand angenommen wird, enthalten, geöffnet oder geschlossen zu werden; und
erste und zweite Hauptkontakte (sw 1a, sw 2a), wovon jeder konfiguriert ist, um einen AUS-Zustand in den ersten und in den dritten Positionen und einen EIN-Zustand in der zweiten Position anzunehmen,
wobei der zweite Totmannschalter (1b) besitzt:
fünfte bis achte normalerweise geschlossene Kontakte (msw 1b-4b), wovon jeder konfiguriert ist, um in Übereinstimmung mit irgendeiner der Betriebspositionen, die eine erste Position, die in einem Zustand ohne Betrieb angenommen wird, eine zweite Position, die in einem Zustand mit teilweisem Betrieb angenommen wird, und eine dritte Position, die in einem Zustand mit vollständigem Betrieb angenommen wird, enthalten, geöffnet oder geschlossen zu werden; und
dritte und vierte Hauptkontakte (sw 1b, sw 2b), wovon jeder konfiguriert ist, um in den ersten und in den dritten Positionen einen AUS-Zustand anzunehmen und in der zweiten Position einen EIN-Zustand anzunehmen,
wobei die zwei Schaltmittel erste und zweite Relais (R1, R2) sind, wobei das erste Relais (R1) erste und zweite normalerweise geöffnete Kontakte (R11, R12) und einen neunten normalerweise geschlossenen Kontakt (R13) besitzt; und das zweite Relais (R2) dritte und vierte normalerweise geöffnete Kontakte (R21, R22) und einen zehnten normalerweise geschlossenen Kontakt (R23) besitzt,
wobei die erste Freigabesignalschaltung (C1) den ersten normalerweise geöffneten Kontakt (R11), der mit einer Parallelschaltung in Reihe geschaltet ist, die die ersten und die dritten Hauptkontakte (sw 1a, sw 1b) parallel schaltet, enthält, und die zweite Freigabesignalschaltung (C2) den dritten normalerweise geöffneten Kontakt (R21), der mit einer Parallelschaltung in Reihe geschaltet ist, die die zweiten und die vierten Hauptkontakte (sw 2a, sw 2b) parallel schaltet, enthält; und
wobei die erste Überwachungsschaltung (C3) das erste Relais (R1) mit einer Parallelschaltung in Reihe schaltet, die eine erste Reihenschaltung (C31), in der die ersten, die fünften und die zehnten normalerweise geschlossenen Kontakte (msw 1a, msw 1b, R23) in Reihe geschaltet sind, und eine zweite Reihenschaltung (C32), in der die dritten und die siebten normalerweise geschlossenen Kontakte (msw 3a, msw 3b) und der zweite normalerweise geöffnete Kontakt (R12) in Reihe geschaltet sind, parallel schaltet; und die zweite Überwachungsschaltung (C4) das zweite Relais (R2) mit einer Parallelschaltung in Reihe schaltet, die eine dritte Reihenschaltung (C41), in der die zweiten, die sechsten und die neunten normalerweise geschlossenen Kontakte (msw 2a, msw 2b, R13) in Reihe geschaltet sind, und eine vierte Reihenschaltung (C42), in der die vierten und die achten normalerweise geschlossenen Kontakte (msw 4a, msw 4b) und der vierte normalerweise geöffnete Kontakt (R22) in Reihe geschaltet sind, parallel schaltet.

3. Programmierhandgerät-Freigabevorrichtung, mit mehren Freigabesignalschaltungen, wovon jede konfiguriert ist, um wahlweise ein Freigabesignal auszugeben, um ein Programmiersignal, das in eine mechanische Vorrichtung eingegeben wird, in Übereinstimmung mit Betriebszuständen mehrerer Totmannschalter, wovon jeder konfiguriert ist, um einen ersten AUS-Zustand, wenn betriebslos, einen EIN-Zustand, wenn teilweise in Betrieb, und einen zweiten AUS-Zustand, wenn vollständig in Betrieb, anzunehmen, freizugeben, mit:
drei oder mehr Schaltmitteln, wovon jedes konfiguriert ist, um eine Freigabesignal-Ausgangsleitung einer Entsprechenden der mehreren Freigabesignalschaltungen zu öffnen/zu schließen; und
drei oder mehr Überwachungsschaltungen, wovon jede konfiguriert ist, um ein Entsprechendes der drei oder mehr Schaltmittel in Übereinstimmung mit Ergebnissen der Detektion der Betriebszustände der mehreren Totmannschalter zu betätigen,
wobei dann, wenn ein Betätigungselement wenigstens eines der Totmannschalter in den zweiten AUS-Zustand geschaltet worden ist, jede der drei oder mehr Überwachungsschaltungen das Entsprechende der Schaltmittel dazu veranlasst, die Ausgangsleitung in einem geöffneten Zustand zu halten, bis detektiert wird, dass alle der mehreren Totmannschalter jeweils veranlasst worden sind, den ersten AUS-Zustand anzunehmen.

## Revendications

1. Dispositif de validation pour boîtier d'apprentissage, comprenant des premier et deuxième circuits de signaux de validation (C1, C2) conçus chacun pour émettre sélectivement un signal de validation pour valider un signal d'apprentissage donné à un appareil mécanique selon des états de fonctionnement de premier et deuxième interrupteurs d'homme mort (1a, 1b) conçus pour adopter un premier état éteint, quand ils ne sont pas actionnés, un état allumé quand ils sont à moitié actionnés, et un deuxième état éteint quand ils sont complètement actionnés, comprenant :
deux moyens de commutation (R1, R2) conçus chacun pour ouvrir/fermer une ligne de sortie de signal de validation des premier et deuxième circuits de signal de validation, respectivement ; et
des premiers et deuxième circuits de contrôle (C3, C4) conçus chacun pour actionner respectivement les deux moyens de commutation selon les résultats de détection des états actionnés des premier et deuxième interrupteurs d'homme mort,
étant précisé qu'après qu'un élément d'actionnement du premier et/ou du deuxième interrupteur d'homme mort a été tourné et amené dans le deuxième état éteint, chacun des premier et deuxième circuits de contrôle amène le moyen de commutation respectif à maintenir la ligne de sortie dans un état ouvert jusqu'à ce que les premier et deuxième interrupteurs d'homme mort conçus pour adopter le premier état éteint soient tous les deux détectés.

2. Dispositif de validation pour boîtier d'apprentissage selon la revendication 1,
dans lequel le premier interrupteur d'homme mort (1a) a :
des premier à quatrième contacts normalement fermés (msw1a-4a) conçus chacun pour s'ouvrir ou se fermer selon l'une quelconque des positions d'actionnement comprenant une première position adoptée dans une condition non actionnée, une deuxième position adoptée dans une condition à moitié actionnée, et une troisième position adoptée dans une condition complètement actionnée ; et
des premier et deuxième contacts principaux (sw1a, sw2a) conçus chacun pour adopter un état éteint au niveau des première et troisième positions, et un état allumé au niveau de la deuxième position ;
dans lequel le deuxième interrupteur d'homme mort (1b) a :
des cinquième à huitième contacts normalement fermés (msw 1b-4b) conçus chacun pour s'ouvrir ou se fermer selon l'une quelconque des positions d'actionnement comprenant une première position adoptée dans une condition non actionnée, une deuxième position adoptée dans une condition à moitié actionnée, et une troisième position adoptée dans une condition complètement actionnée ; et
des troisième et quatrième contacts principaux (sw1b, sw2b) conçus chacun pour adopter une position éteinte au niveau des première et troisième positions, et un état allumé au niveau de la deuxième position,
dans lequel les deux moyens de commutation sont des premier et deuxième relais (R1, R2), le premier relais (R1) ayant des premier et deuxième contacts normalement ouverts (R11, R12) et un neuvième contact normalement fermé (R13) ; et le deuxième relais (R2) ayant des troisième et quatrième contacts normalement ouverts (R21, R22) et un dixième contact normalement fermé (R23),
dans lequel le premier circuit de signal de validation (C1) comprend le premier contact normalement ouvert (R11) relié en série à un circuit parallèle qui relie en parallèle les premier et troisième contacts principaux (sw1a, sw1b) ; et le deuxième circuit de signal de validation (C2) comprend le troisième contact normalement ouvert (R21) relié en série à un circuit parallèle qui relie en parallèle les deuxième et quatrième contacts principaux (sw2a, sw2b), et
dans lequel le premier circuit de contrôle (C3) relie le premier relais (R1) en série à un circuit parallèle qui relie en parallèle un premier circuit série (C31) dans lequel les premier, cinquième et dixième contacts normalement fermés (msw1a, msw1b, R23) sont reliés en série, et un deuxième circuit série (C32) dans lequel les troisième et septième contacts normalement fermés (msw3a, msw3b) et le deuxième contact normalement ouvert (R12) sont reliés en série ; et le deuxième circuit de contrôle (C4) relie le deuxième relais (R2) en série à un circuit parallèle qui relie en parallèle un troisième circuit série (C41) dans lequel les deuxième, sixième et neuvième contacts normalement fermés (msw2a, msw2b, R13) sont reliés en série, et un quatrième circuit série (C42) dans lequel les quatrième et huitième contacts normalement fermés (msw4a, msw4b) et le quatrième contact normalement ouvert (R22) sont reliés en série.

3. Dispositif de validation pour boîtier d'apprentissage, comprenant plusieurs circuits de signaux de validation conçus chacun pour émettre sélectivement un signal de validation pour valider un signal d'apprentissage donné à un appareil mécanique selon des états de fonctionnement de plusieurs interrupteurs d'homme mort conçus pour adopter un premier état éteint, quand ils ne sont pas actionnés, un état allumé quand ils sont à moitié actionnés, et un deuxième état éteint quand ils sont complètement actionnés, comprenant :
trois moyens de commutation ou plus qui sont conçus chacun pour ouvrir/fermer une ligne de sortie de signal de validation des circuits de signal de validation respectifs ; et
trois circuits de contrôle ou plus qui sont conçus chacun pour actionner respectivement les trois moyens de commutation ou plus selon les résultats de détection des états actionnés des interrupteurs d'homme mort,
étant précisé qu'après qu'un élément d'actionnement de l'un au moins des interrupteurs d'homme mort a été tourné et amené dans le deuxième état éteint, chacun des trois circuits de contrôle ou plus amène le moyen de commutation respectif à maintenir la ligne de sortie dans un état ouvert jusqu'à ce que tous les interrupteurs d'homme mort conçus pour adopter le premier état éteint soient détectés.
